# EUROPÄISCHE PATENTSCHRIFT

(11) **EP 4 417 036 B1**
(45) Veröffentlichungstag und Bekanntmachung des Hinweises auf die Patenterteilung: **26.08.2026**
(21) Anmeldenummer: 24153329.8
(22) Anmeldetag: 23.01.2024
(51) Int. Cl.: A01D 61/00, A01D 61/04, A01D 87/12, A01D 85/00

(54) **SAMMELVORRICHTUNG FÜR RUNDBALLEN**
ROUND BALE COLLECTING DEVICE
DISPOSITIF DE RAMASSAGE DE BALLES RONDES

(30) Priorität: 17.02.2023 DE 102023103974
(43) Veröffentlichungstag der Anmeldung: 21.08.2024
(73) Patentinhaber: Maschinenfabrik Bernard Krone GmbH & Co. KG, 48480 Spelle (DE)
(72) Erfinder: Bruhn, Nils, 48480 Spelle (DE); Osthues, Christian, 48477 Hörstel (DE); Blome, Dirk, 49624 Löningen (DE); Berghaus, André, 48727 Billerbeck (DE); Kreyenhagen, Michael, 49163 Bohmte (DE)

(56) Entgegenhaltungen:
- US-A- 2 613 591
- US-A- 2 643 604
- US-B1- 7 004 706

## Beschreibung

Die vorliegende Erfindung betrifft eine Sammelvorrichtung für Rundballen. Die Sammelvorrichtung weist eine Rahmeneinrichtung und eine Fördereinrichtung auf. Die Fördereinrichtung ist zur Förderung mehrerer Rundballen relativ zu der Rahmeneinrichtung in eine Förderrichtung ausgebildet. Die Fördereinrichtung weist zumindest zwei Zugorgane und zumindest zwei in die Förderrichtung zueinander versetzt angeordnete Förderelemente auf. Die Zugorgane sind quer zur Förderrichtung voneinander beabstandet und umlaufend um eine vordere Umlenkachse und eine hintere Umlenkachse ausgebildet. Die Zugorgane weisen einen Fördertrum und einen Rücklauftrum auf. Die Förderelemente erstrecken sich zumindest in einer Förderkonfiguration der Fördereinrichtung zwischen den Fördertrumen der Zugorgane quer zur Förderrichtung länglich. Die Förderelemente sind an den Zugorganen befestigt und weisen jeweils einen mittig zwischen den Zugorganen angeordneten Förderabschnitt auf. Dabei umfasst die Fördereinrichtung zumindest eine erste Fördereinheit und eine zweite Fördereinheit, die jeweils ein erstes Förderelement und ein zweites Förderelement umfassen, die in die Förderrichtung benachbart zueinander an den Zugorganen befestigt sind, wobei der Abstand zwischen dem ersten Förderelement und dem zweiten Förderelement der ersten Fördereinheit dem Abstand zwischen dem ersten Förderelement und dem zweiten Förderelement der zweiten Fördereinheit gleicht. Die Förderabschnitte der Förderelemente sind in der Förderkonfiguration zur Ausbildung eines sich zwischen den Förderabschnitten hindurch erstreckenden Aufnahmeraumes zur Aufnahme eines zu fördernden Rundballens um einen Förderabstand von der Rahmeneinrichtung beabstandet.

Eine solche Sammelvorrichtung ist aus dem Dokument US 9,066,471 B1 bekannt. Die offenbarte Sammelvorrichtung dient zum Sammeln von auf einer Ackerfläche abgelegten Rundballen. Gemäß dem Stand der Technik ist die Fördereinrichtung nach Art eines Kratzbodens ausgebildet. Die Förderelemente liegen dabei mit ihren Förderabschnitten auf einer ebenen Oberfläche der Rahmeneinrichtung auf. Von der Fördereinrichtung geförderte Rundballen werden von einem der Förderelemente in die Förderrichtung angeschoben und rollen auf der Oberfläche der Rahmeneinrichtung ab.

Nachteilig am Stand der Technik ist, dass sich das übliche Wickelmaterial der Rundballen bei der Förderung regelmäßig abrollt, wodurch die Rundballen geschwächt oder aufgelöst werden. Nachteilig ist außerdem, dass die Rundballen die Förderelemente bei einem Betrieb der Sammelvorrichtung auf leicht geneigten Ackerflächen bereits überrollen und sich an benachbarte Rundballen anlegen. Durch die Reibung der benachbarten Rundballen aneinander wird die Schwächung oder Auflösung der Rundballen noch gefördert. Außerdem sind eine kontrollierte Förderung und ein kontrolliertes Abladen der Rundballen durch die Fördereinrichtung auf den geneigten Ackerflächen nicht möglich.

Die US 2 643 604 A zeigt eine Ballenpresse mit einem Rahmen sowie einem Formriemens, einem Ballenablenker zum Abfangen von entladenen Ballen. Ein Förderrahmen ist mit seinem einen Ende unterhalb des Abweisers und in der Nähe des Bandes positioniert, wobei sich der Förderrahmen von dem Riemen und dem Abweiser fort und nach oben erstreckt. Außerdem ist eine Einrichtung zum Fördern von Ballen auf dem Rahmen nach oben entlang des Förderrahmens eingerichtet.

Die US 2 613 591 A zeigt eine Ballenpresse mit oberen und unteren Riemenmitteln zur Ballenformung, sowie mit einer Ballenhebeeinrichtung, die an ihrem unteren Ende direkt mit der Ballenpresse in einer Position gekoppelt ist, um die Ballen, die von der Ballenpresse entladen werden, aufzunehmen, und die wirksam ist, um die Ballen in einem nach oben geneigten Weg anzuheben. Am Rahmen der Ballenpresse ist eine Balleneingriffsrolle montiert, deren Balleneingriffsfläche sich in ihrer Entladeposition auf Höhe der Oberseite des unteren Riemenmittels befindet.

Die US 7 004 706 B1 offenbart eine Vorrichtung zum Laden, Transportieren und Entladen von Heuballen, mit einen Anhängerrahmen, einer Fördervorrichtung, die am Anhängerrahmen befestigt und so angeordnet ist, dass sie die Heuballen über einen Großteil der Länge des Anhängerrahmens transportiert, einem ein Ladesystem, das an einer ersten Seite des Anhängerrahmens angebracht ist und ein Bewegungsdeck und einen Bewegungsarm umfasst, der so angeordnet ist, dass er die Heuballen über das Bewegungsdeck und zum Anhängerrahmen bewegt. Der Anhängerrahmen weist ein Ladeende auf und eine Übergabeplattform, die sich in der Nähe des Ladeendes befindet, wobei die Übergabeplattform eine Trägerbahn aufweist, die so positioniert ist, dass sie die Heuballen zu der Fördervorrichtung übergibt.

Aufgabe der vorliegenden Erfindung ist die Bereitstellung einer gattungsgemäßen Sammelvorrichtung, die eine zuverlässige und schonende Förderung der Rundballen ermöglicht.

Die Aufgabe wird gelöst durch die Merkmale des unabhängigen Patentanspruchs 1. Vorteilhafte Ausführungsformen sind den abhängigen Patentansprüchen zu entnehmen.

Die Sammelvorrichtung dient zur Aufnahme und zum Transport mehrerer Rundballen. Die Rundballen sind dazu in die Förderrichtung aufgereiht auf der Sammelvorrichtung anzuordnen. Die Rotations- oder Symmetrieachse der Rundballen verläuft dabei insbesondere parallel zu den Umlenkachsen.

Die Rahmeneinrichtung der Sammelvorrichtung umfasst insbesondere sämtliche Bauteile der Sammelvorrichtung, die nicht von der Fördereinrichtung umfasst sind, sich also im Betrieb nicht mit der Fördereinrichtung in die Förderrichtung bewegen. Bevorzugt umfasst die Rahmeneinrichtung einen Maschinenrahmen der Sammelvorrichtung sowie zumindest im Normalbetrieb unbeweglich daran angeordnete Bauteile wie z.B. Gehäuseelemente, ein Fahrwerk oder dergleichen.

Die Fördereinrichtung fördert insbesondere, nachdem ein Rundballen von der Sammelvorrichtung aufgenommen wurde und bevor der nächste Rundballen aufgenommen wird. Durch die Förderung wird der Platz auf der Sammelvorrichtung, an den neu aufzunehmende Rundballen zunächst gelangen, freigemacht. Die Förderrichtung ist bevorzugt der Fahrtrichtung der Sammelvorrichtung entgegengerichtet. Bei jeder Förderung wird die Fördereinrichtung insbesondere um eine Strecke in die Förderrichtung bewegt, die geringfügig größer ist als der Durchmesser der aufgenommenen Rundballen. Nachdem sämtliche für Rundballen zur Verfügung stehende Plätze der Sammelvorrichtung mit Rundballen belegt sind, sind sie durch eine weitere Förderung der Fördereinrichtung in die Förderrichtung von der Sammelvorrichtung abzulegen.

Bei den Zugorganen der Fördereinrichtung handelt es sich vorzugsweise um Ketten, insbesondere Rollenketten, oder Riemen. Die Zugorgane laufen im Bereich der Umlenkachsen bevorzugt um Umlenkelemente wie Zahnräder um. Zumindest eines der Zahnräder, insbesondere die beiden um die vordere Umlenkachse umlaufenden Zahnräder, ist/sind bevorzugt, insbesondere von einem von der Sammelvorrichtung umfassten Hydraulikmotor, anzutreiben. Die Zugorgane sind bevorzugt um mehr als 120 cm, besonders bevorzugt um zumindest im Wesentlichen 130 cm, quer zur Förderrichtung voneinander beabstandet. Die Zugorgane sind bevorzugt zumindest teilweise U-förmig von der Rahmeneinrichtung eingehaust. Die Fördertrume und die Rücklauftrume sind im Wesentlichen gerade verlaufende Abschnitte der Zugorgane. Die Fördertrume sind in Betrieb insbesondere die dem geförderten Rundballen näheren und sich in die Förderrichtung bewegenden Trume, wohingegen die Rücklauftrume sich entgegen der Förderrichtung bewegen.

Bei den Förderelementen handelt es sich bevorzugt um sich rechtwinklig zur Förderrichtung länglich von einem bis zum anderen Zugorgan erstreckende Stangen oder Profile. Zumindest in einer Draufsicht sind die Förderelemente zwischen den Zugorganen angeordnet. Insbesondere sind über die gesamte Länge der Zugorgane Förderelemente verteilt. Die Förderelemente werden im Betrieb durch die Zugorgane in die Förderrichtung bewegt und wirken ihrerseits auf die Rundballen ein.

Jedes Förderelement weist einen Förderabschnitt auf. Der Förderabschnitt ist insbesondere derjenige Abschnitt jedes Förderelementes, der in der Draufsicht von dem vom Förderelement mittelbar oder unmittelbar geförderten Rundballen verdeckt ist. Der Förderabschnitt ist insbesondere ein zwischen zwei gedachten Ebenen, die sich zu den Umlenkachsen rechtwinklig erstrecken, liegender Teil des Förderelementes. Der Förderabschnitt hat insbesondere eine quer zur Förderrichtung gemessene Breite von 120 cm. Der Rundballen hat im Betrieb insbesondere zumindest zeitweise unmittelbar Kontakt zum Förderabschnitt. Der Förderabschnitt ist von beiden Zugorganen insbesondere gleich weit beabstandet und wird besonders bevorzugt mittig von einer Längsmittelebene geschnitten, die von beiden Zugorganen gleichweit entfernt ist und sich rechtwinklig zu den Umlaufachsen erstreckt.

Der Aufnahmeraum ist ein Freiraum, in den ein Rundballen aufzunehmen ist. Der Aufnahmeraum erstreckt sich unter anderem zwischen den beiden Förderelementen. Durch die Beabstandung der Förderabschnitte von der Rahmeneinrichtung erstreckt sich der Aufnahmeraum insofern bevorzugt vertikal zwischen den Förderabschnitten hindurch, als der Aufnahmeraum sich in einer Seitenansicht teilweise oberhalb und teilweise unterhalb des Zwischenraumes zwischen den beiden Förderabschnitten erstreckt. Der Aufnahmeraum reicht bevorzugt näher an eine Umlenkachsenebene heran, in der die Umlenkachsen angeordnet sind, als die Förderabschnitte der Förderelemente oder wird gar von der Umlenkachsenebene geschnitten. Dabei muss der Aufnahmeraum zwischen den Förderelementen nicht gegenständlich umgrenzt sein, sondern kann von einer rein gedachten Hüllfläche definiert sein. Die Förderabschnitte sind insbesondere derart von der Rahmeneinrichtung beabstandet, dass im Betrieb das gesamte Gewicht der Rundballen auf den Förderelementen aufliegt. Die Sammelvorrichtung bildet vorzugsweise zumindest drei Aufnahmeräume aus.

Durch die wie beschrieben ausgebildeten Aufnahmeräume sinken die zu fördernden Rundballen teilweise zwischen die sie fördernden Förderelemente ein. Dies verhindert eine unbeabsichtigte Bewegung des Rundballens relativ zu den Förderelementen. So lässt sich auch ein Abstand zwischen benachbarten Rundballen zuverlässig aufrechterhalten. Durch die Beabstandung des Aufnahmeraumes von der Rahmeneinrichtung wird außerdem ein Abrollen des Rundballens während der Förderung vermieden. Insgesamt ergibt sich dadurch die Möglichkeit des Sammelns und Ablegens der Rundballen unabhängig von einer Neigung der jeweiligen Ackerfläche und bei einer Schonung der Rundballen selbst.

Die Fördereinrichtung umfasst zumindest eine erste Fördereinheit, die ein erstes Förderelement und ein zweites Förderelement umfasst, die in die Förderrichtung benachbart zueinander an den Zugorganen befestigt sind. Weiterhin umfasst die Fördereinrichtung zumindest eine zweite Fördereinheit, die auch ein erstes Förderelement und ein zweites Förderelement umfasst, die in die Förderrichtung benachbart zueinander an den Zugorganen befestigt sind. Der Abstand zwischen dem ersten Förderelement und der ersten Fördereinheit und dem zweiten Förderelement der ersten Fördereinheit gleicht dem Abstand zwischen dem ersten Förderelement der zweiten Fördereinheit und dem zweiten Förderelement der zweiten Fördereinheit. Insbesondere sind die erste Fördereinheit und die zweite Fördereinheit insgesamt gleich ausgebildet. Der Abstand beträgt bevorzugt zumindest im Wesentlichen 120 cm. Der Abstand ist dabei so zu verstehen, dass er vorliegt, während beide Förderelemente der jeweiligen Fördereinheit an den Fördertrumen der Zugorgane angeordnet sind. Mit der zueinander benachbarten Befestigung der Förderelemente an den Zugorganen ist gemeint, dass zwischen dem ersten und dem zweiten Förderelement der jeweiligen Fördereinheit kein weiteres Förderelement angeordnet ist. Durch die gleiche Ausbildung der Fördereinheiten lassen sich mehrere Rundballen bei gleich hoher Zuverlässigkeit fördern.

Erfindungsgemäß ist das zweite Förderelement der ersten Fördereinheit in die Förderrichtung benachbart zum ersten Förderelement der zweiten Fördereinheit befestigt. Zwischen der ersten Fördereinheit und der zweiten Fördereinheit ist also kein weiteres Förderelement angeordnet. Weiterhin erfindungsgemäß weicht der Abstand zwischen dem ersten Förderelement der ersten Fördereinheit und dem zweiten Förderelement der ersten Fördereinheit von einem Abstand zwischen dem zweiten Förderelement der ersten Fördereinheit und dem ersten Förderelement der zweiten Fördereinheit ab.

Bevorzugt ist die Sammelvorrichtung dazu ausgebildet, die Geschwindigkeit der Förderung an eine Fahrtgeschwindigkeit der gesamten Sammelvorrichtung entgegen der Förderrichtung anzupassen. Dadurch lässt sich erreichen, dass sich die Rundballen beim Ablegen auf die Ackerfläche ausschließlich in eine vertikale Richtung bewegen. Es lässt sich insbesondere vermeiden, dass die Ballen sich beim Auftreffen auf die Ackerfläche anteilig in die Förderrichtung oder entgegengesetzt bewegen und vom beabsichtigten Ablageort wegrollen. Die Sammelvorrichtung weist bevorzugt ein eigenes Fahrwerk mit zumindest einer Achse und zwei Rädern auf, die in einer Seitenansicht insbesondere zumindest im Wesentlichen mittig angeordnet sind und an denen bevorzugt ein Fahrtgeschwindigkeitssensor angeordnet ist. Für einen möglichst tiefen Schwerpunkt der Sammelvorrichtung werden die Räder bevorzugt von der Umlenkachsenebene geschnitten. Frontseitig weist die Sammelvorrichtung bevorzugt eine mittig, insbesondere zur Längsmittelebene spiegelsymmetrisch, ausgebildete Deichsel auf, mittels der die Sammelvorrichtung an eine Zugmaschine oder unmittelbar an einer Rundballenpresse anzuhängen ist. Vorzugsweise weist die Sammelvorrichtung frontseitig eine Übergabeeinrichtung zur Beförderung von Rundballen in den Aufnahmeraum auf, die um eine zu den Umlenkachsen parallele Schwenkasche schwenkbar ist. Die Rahmeneinrichtung weist insbesondere Leitelemente auf, die in einem zur Förderrichtung rechtwinkligen Querschnitt seitlich oberhalb der Fördereinrichtung angeordnet sind und zur seitlichen Stützung aufgenommener Rundballen dient.

Vorzugsweise ist die Rahmeneinrichtung derart ausgebildet, dass die Förderabschnitte im Betrieb während der Bewegung der sie aufweisenden Förderelemente in die Förderrichtung durchgängig um den Förderabstand von der Rahmeneinrichtung beabstandet bleiben. Mit der Bewegung ist insbesondere eine im Wesentlichen oder streng ausschließlich in die Förderrichtung gerichtete Bewegung gemeint. Dadurch bleibt die zuverlässige Positionierung des Rundballens im Aufnahmeraum während der gesamten Förderung entlang der Fördertrume erhalten.

Besonders bevorzugt sind die Förderabschnitte in einem Längsschnitt zumindest so weit von der Rahmeneinrichtung beabstandet, wie sie von der Umlenkachsenebene beabstandet sind. Das bedeutet insbesondere, dass ein Zwischenraum zwischen der Umlenkachsenebene und einer Fördertrumebene, in der sich die Fördertrume erstrecken, in einem Längsschnitt oder in einer Seitenansicht zwischen den Umlenkachsen frei von der Rahmeneinrichtung ist. Die Beabstandung ist in diesem Fall insbesondere als ausschließlich parallel zur Längsmittelebene gemessen zu verstehen. Durch diese Ausbildung können die Rundballen so tief zwischen die sie tragenden Förderelemente einsinken, dass die Rundballen besonders zuverlässig positioniert sind.

Zumindest eines der Förderelemente weist eine relativ zum Förderabschnitt des Förderelementes drehbar gelagerte Laufrolle auf. Die Laufrolle liegt zumindest bei Anordnung des Förderelementes an den Fördertrumen zum Abrollen auf einer Abrolloberfläche der Rahmeneinrichtung auf. Durch die Laufrolle lässt sich die von dem Rundballen auf das Förderelement übertragende Gewichtskraft unmittelbar in die Rahmeneinrichtung einleiten, ohne dass bei der Förderung eine signifikante Reibung zwischen der Fördereinrichtung und der Rahmeneinrichtung auftritt. Durch die Minimierung der Reibung kann ein zu Ausfällen der Fördereinrichtung führender Verschleiß minimiert werden und können die Festigkeit des Rundballens gefährdende Vibrationen während der Förderung weitgehend vermieden werden.

Mit Vorteil ist die Laufrolle zwischen dem Förderabschnitt des Förderelementes und zumindest einem der Zugorgane angeordnet. Hierdurch kann die Gewichtskraft unmittelbar angrenzend an den Aufnahmeraum in die Rahmeneinrichtung eingeleitet werden und eine unnötige Belastung und damit Funktionsgefährdung der Fördereinrichtung vermieden werden. Alternativ dazu könnte sich auch das Zugorgan zwischen der Laufrolle und dem Förderabschnitt hindurcherstrecken. Vorzugsweise weist das Förderelement zwei Laufrollen auf, zwischen denen der Förderabschnitt angeordnet ist.

Bevorzugt ist der Förderabschnitt im Querschnitt des ihn aufweisenden Förderelementes, d.h. im Längsschnitt der Sammelvorrichtung, rund ausgebildet. Der Durchmesser des Förderabschnittes gleicht besonders bevorzugt zumindest im Wesentlichen dem Durchmesser der zumindest einen Laufrolle. Alternativ zu der zumindest einen Laufrolle kann die Gewichtskraft der Rundballen auch von den Zugorganen aufgefangen werden, die die resultierende Kraft insbesondere über die Zahnräder in die Rahmeneinrichtung einleiten.

Vorzugsweise ist der Abstand zwischen dem ersten Förderelement der ersten Fördereinheit und dem zweiten Förderelement der ersten Fördereinheit größer als der Abstand zwischen dem zweiten Förderelement der ersten Fördereinheit und dem ersten Förderelement der zweiten Fördereinheit. Dadurch lässt sich zum einen ein derart tiefes Einsinken des Rundballens zwischen die Förderelemente der Fördereinheiten erreichen, dass dadurch eine Relativbewegung zwischen dem Rundballen und der Fördereinrichtung besonders sicher vermieden wird, und zum anderen ein unnötig großer Abstand zwischen den von den Fördereinheiten aufgenommenen Rundballen vermeiden, um eine möglichst große Zahl von Rundballen mit der Sammelvorrichtung aufnehmen zu können.

Vorzugsweise weist die Fördereinrichtung zumindest eine weitere oder dritte Fördereinheit auf, die ein erstes Förderelement und ein zweites Förderelement umfasst, die in die Förderrichtung benachbart zueinander an den Zugorganen befestigt sind, wobei der Abstand zwischen dem ersten Förderelement der ersten Fördereinheit und dem zweiten Förderelement der ersten Fördereinheit größer ist als der Abstand zwischen dem ersten Förderelement der weiteren oder dritten Fördereinheit und dem zweiten Förderelement der weiteren oder dritten Fördereinheit. Der letztgenannte Abstand beträgt besonders bevorzugt zumindest im Wesentlichen 90 cm. Nach dieser Ausbildung weist die Fördereinrichtung unterschiedlich große Fördereinheiten auf, die für Rundballen mit unterschiedlich großen Durchmessern angepasst sind. Die weitere oder dritte Fördereinheit ist durch den geringeren Abstand zwischen ihren Förderelementen für Rundballen kleineren Durchmessers optimiert.

**In** einer vorteilhaften Ausgestaltung der Erfindung weist die Fördereinrichtung mehrere wie die erste Fördereinheit ausgebildete Fördereinheiten und mehrere wie die weitere oder dritte Fördereinheit ausgebildete Fördereinheiten auf. Dabei ist die Fördereinrichtung bevorzugt in eine erste Konfiguration zu bringen, in der sämtliche Förderelemente der wie die erste Fördereinheit ausgebildeten Fördereinheiten einschließlich der ersten Fördereinheit einerseits der Umlenkachsenebene angeordnet sind und sämtliche Förderelemente der wie die dritte Fördereinheit ausgebildeten Fördereinheiten einschließlich der dritten Fördereinheit andererseits der Umlenkachsenebene angeordnet sind. Dadurch ist die Sammelvorrichtung sowohl mit Rundballen kleineren Durchmessers als auch mit Rundballen größeren Durchmessers zu füllen, wobei jeweils jeder Rundballen von einer der Größe entsprechenden Fördereinheit getragen wird.

Bevorzugt weist die zumindest eine Fördereinheit, insbesondere jede Fördereinheit, zumindest ein biegeschlaffes Aufnahmeelement auf. Das Aufnahmeelement ist am Förderabschnitt des ersten Förderelementes der jeweiligen Fördereinheit und am Förderabschnitt des zweiten Förderelementes der jeweiligen Fördereinheit befestigt. Bei dem Aufnahmeelement handelt es sich insbesondere um einen flachen Gurt, bevorzugt aus einem Kunststoff ausgebildet. Mit einem mittig zwischen den Förderelementen angeordneten Mittelteil des Aufnahmeelementes wird bevorzugt der Aufnahmeraum lokal umgrenzt. Durch diese Ausgestaltung der zumindest einen Fördereinheit wird die Flexibilität der Sammelvorrichtung hinsichtlich der Durchmesser der aufzunehmenden Rundballen vergrößert, da auch besonders kleine Rundballen nun nicht zwischen den Förderelementen der Fördereinheit hindurchfallen können. Außerdem lässt sich eine größere Kontaktfläche zwischen Rundballen und Fördereinheit erreichen, wodurch die äußere Belastung des Rundballens verringert ist.

Die Fördereinrichtung mit der zumindest einen Fördereinheit, die das zumindest eine Aufnahmeelement aufweist, ist auch als in Alleinstellung offenbart anzusehen. Dabei ist die Fördereinrichtung zum Umlauf um zwei Achsen geeignet und unabhängig davon offenbart, ob die Förderabschnitte bei Verwendung der Fördereinrichtung um den Förderabstand von einer Rahmeneinrichtung beabstandet sind. Gegenüber vorbekannten Fördereinrichtungen ohne Aufnahmeelemente werden erhebliche Vorteile erreicht.

Vorzugsweise ist die Länge eines zwischen dem ersten Förderelement und dem zweiten Förderelement angeordneten Mittelabschnittes des Aufnahmeelementes derart größer als der Abstand zwischen dem ersten Förderelement und dem zweiten Förderelement, dass der Mittelabschnitt zumindest in der Förderkonfiguration durchhängt. Der Mittelabschnitt kann einen Teil des Aufnahmeelementes oder das gesamte Aufnahmeelement ausmachen. Der Mittelabschnitt ist insbesondere in einer Draufsicht aus einer zur Umlenkachsenebene rechtwinkligen Richtung zwischen den Förderelementen angeordnet. Das Aufnahmeelement, insbesondere sein Mittelteil, hat bevorzugt einen geringeren Abstand zur Umlenkachsenebene als zumindest die Förderabschnitte der Förderelemente. Durch das Durchhängen des Mittelabschnittes wird eine unbeabsichtigte Relativbewegung zwischen dem Rundballen und er Fördereinheit auch im Falle eines besonders geringen Durchmessers des Rundballens zuverlässig entgegengewirkt.

Das erste Förderelement und/oder das zweite Förderelement der zumindest einen Fördereinheit weisen/weist vorzugsweise zumindest eine durchgängige Ausnehmung auf, durch die sich das Aufnahmeelement zu seiner Befestigung hindurcherstreckt. Innerhalb der Ausnehmung ist insbesondere ein Endabschnitt des Aufnahmeelementes angeordnet. Bei der Ausnehmung handelt es sich besonders bevorzugt um einen quer zur Förderrichtung länglichen Schlitz. Ein mit Bezug auf die Ausnehmung dem vorbeschriebenen Mittelabschnitt des Aufnahmeelementes gegenüberliegender Endbereich des Aufnahmeelementes ist bevorzugt durch eine Querschnittsvergrößerung an einem unbeabsichtigten Durchtreten der Ausnehmung gehindert. Hierdurch ist eine zuverlässige Festlegung des Aufnahmeelementes gewährleistet, damit auch besonders schwere Rundballen zuverlässig gefördert werden können.

Alternativ oder zusätzlich zur vorbeschriebenen Ausnehmung und der Hindurcherstreckung des Aufnahmelementes weist das Aufnahmeelement zumindest einen sich an den Mittelabschnitt anschließenden Endabschnitt auf, der um das erste Förderelement oder das zweite Förderelement vollständig oder teilweise umgelegt ist. Hierdurch lässt sich die Belastbarkeit der Fördereinheit weiter erhöhen. Der vorbeschriebene Endbereich existiert dabei insbesondere nicht. Bevorzugt ist der umgelegte Endabschnitt, besonders bevorzugt durch Befestigungshilfsmittel, am Mittelabschnitt befestigt, vorzugsweise an dem Mittelabschnitt festgeklemmt. Das Förderelement ist bevorzugt drehbar relativ zum Aufnahmeelement und/oder relativ zu den Zugorganen. Insbesondere sind ist das Aufnahmeelement am ersten Förderelement und am zweiten Förderelement gleichartig befestigt.

Vorzugsweise weist die zumindest eine Fördereinheit, insbesondere jede Fördereinheit, zwei quer zur Förderrichtung voneinander beabstandete Aufnahmeelemente auf. Die Aufnahmeelemente haben bevorzugt eine Breite von zumindest im Wesentlichen 27,5 cm. Die Längsmittelebene schneidet besonders bevorzugt kein Aufnahmeelement. Durch die zwei seitlichen Aufnahmeelemente und dem Platz zwischen ihnen wird zusätzlich zu den vorbeschriebenen Vorteilen zusätzlich eine unbeabsichtigte größere Ablagerung losen Erntegutes auf der Fördereinheit vermieden.

Bevorzugt weist die Sammelvorrichtung eine Sensoreinrichtung mit zumindest einem Sensor auf. Die Sensoreinrichtung ist zur Feststellung zumindest einer Aufnahmekonfiguration der Fördereinrichtung ausgebildet, in der das erste Förderelement der zumindest einen Fördereinheit oder einer der Fördereinheiten relativ zur Rahmeneinrichtung in einer Förderelementaufnahmeposition angeordnet ist. Mit dem ersten Förderelement in der Förderelementaufnahmeposition ist die Fördereinheit optimal positioniert, um einen Rundballen aufzunehmen. Durch die Sensoreinrichtung ist die Positionierung zuverlässig und insbesondere automatisiert zu erreichen.

Bevorzugt ist die Sensoreinrichtung zur Feststellung zumindest einer ersten Aufnahmekonfiguration und zumindest einer zweiten Aufnahmekonfiguration ausgebildet. In der ersten Aufnahmekonfiguration ist das erste Förderelement der ersten Fördereinheit in der Förderelementaufnahmeposition angeordnet. In der zweiten Aufnahmekonfiguration ist das erste Förderelement der weiteren oder dritten Fördereinheit in der Förderelementaufnahmeposition angeordnet. Somit ist anhand der Sensoreinrichtung auch je nach Durchmesser des aufzunehmenden Rundballens die geeignete Fördereinheit zur Aufnahme des Rundballens zu positionieren. Die Positionierung erfolgt besonders bevorzugt automatisch in Abhängigkeit eines Signals der Rundballenpresse. In Abhängigkeit dieses Signals oder weiterer Signale der Rundballenpresse wird insbesondere auch eine Deichselabsenkung oder eine Bewegung der Übergabeeinrichtung ausgelöst. Zur Unterscheidung der unterschiedlich großen Fördereinheiten weist die Sensoreinrichtung insbesondere mehrere Sensoren an mehreren Positionen entlang zumindest eines der Zugorgane auf, um den Abstand der Förderelemente voneinander feststellen zu können.

Vorzugsweise ist das erste Förderelement in der Förderelementaufnahmeposition der Umlenkachsenebene näher als das zweite Förderelement derselben Fördereinheit. Alternativ dazu wird das erste Förderelement in der Förderelementausnahmeposition bevorzugt von der Umlenkachsenebene geschnitten. Dadurch, dass das erste Förderelement in der Förderelementaufnahmeposition relativ zum zweiten Förderelement tiefer angeordnet ist, ist die Aufnahme des Rundballens in die Förderrichtung erleichtert.

Im Folgenden wird die Erfindung anhand von Figuren beschrieben. Die Figuren sind lediglich beispielhaft und schränken den allgemeinen Erfindungsgedanken nicht ein.

Es zeigen:
- Fig. 1: eine erfindungsgemäße Sammelvorrichtung in einem an eine Rundballenpresse angehängten Zustand in einer perspektivischen Darstellung;
- Fig. 2: eine Fördereinrichtung der Sammelvorrichtung gem. Fig. 1 in einer Seitenansicht;
- Fig. 3: die Fördereinrichtung gem. Fig. 2 in einer perspektivischen Darstellung;
- Fig. 4: eine Fördereinheit der Fördereinrichtung gem. Fig. 3 in einer Detailansicht;
- Fig. 5: einen Teil der Sammelvorrichtung gemäß Fig. 1 in einem Querschnitt.

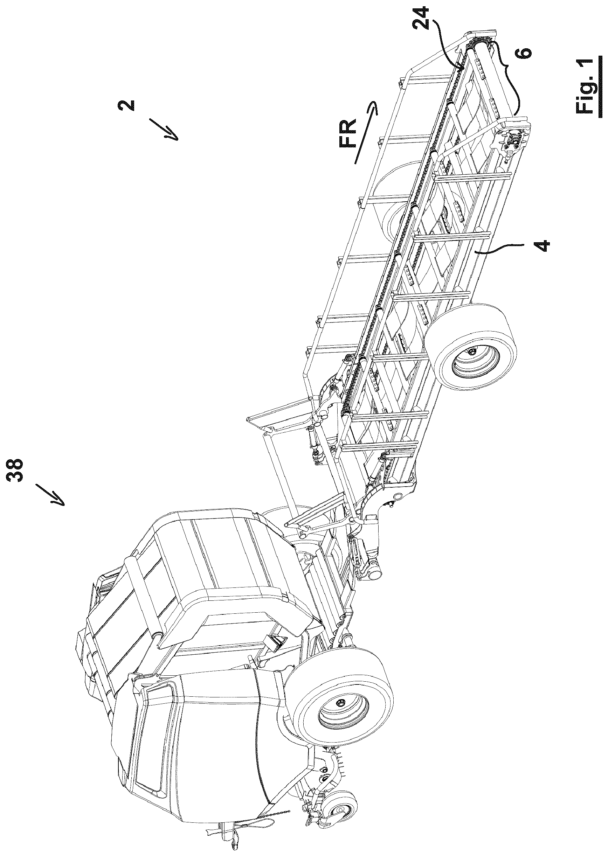

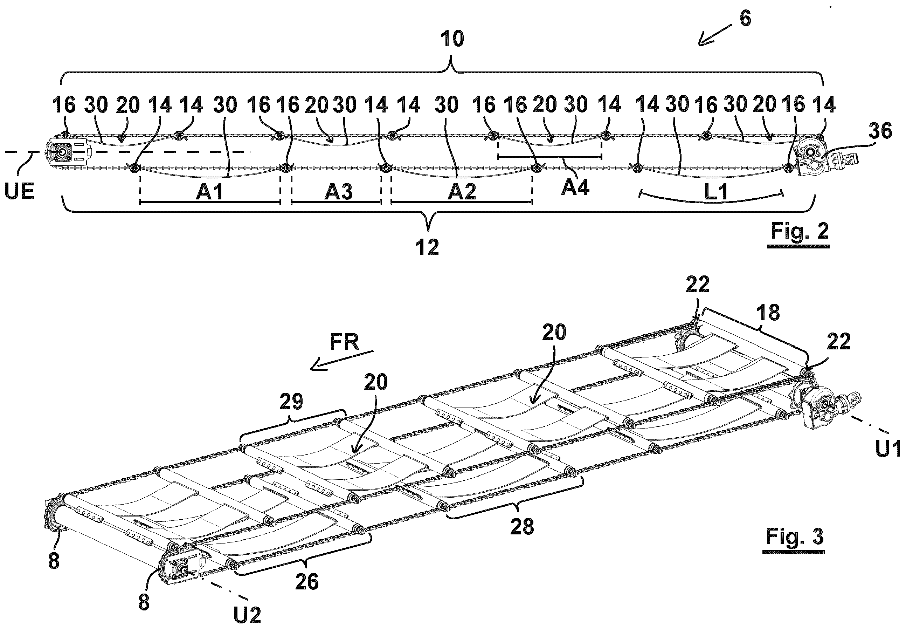

Fig. 1 zeigt eine erfindungsgemäße Sammelvorrichtung 2 schräg von hinten. Die Sammelvorrichtung 2 weist eine Rahmeneinrichtung 4 mit einem Fahrwerk und einer Deichsel auf, mit der die Sammelvorrichtung 2 an eine von der Erfindung nicht umfasste Rundballenpresse 38 angehängt ist. Außerdem umfasst die Sammelvorrichtung 2 eine Fördereinrichtung 6, die zur Förderung mehrerer nicht dargestellter Rundballen relativ zu der Rahmeneinrichtung 4 in eine Förderrichtung FR ausgebildet ist und in den Figuren 2 bis 4 im Detail dargestellt ist.

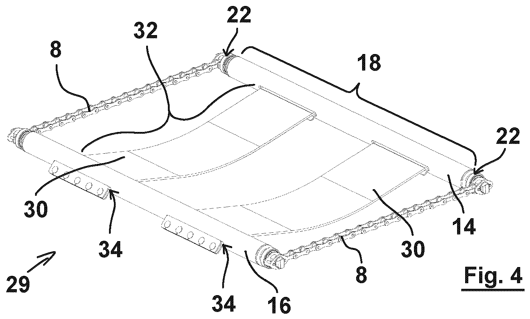

Die Fördereinrichtung 6 umfasst zwei jeweils als endlose Kette ausgebildete Zugorgane 8, die quer zu Förderrichtung FR voneinander beabstandet sind und um eine vordere Umlenkachse U1 und eine hintere Umlenkachse U2 umlaufend ausgebildet sind (vgl. Fig. 3). Im Bereich der vorderen Umlenkachse U1 ist ein Hydraulikmotor 36 angeordnet, der zum Antrieb der Zugorgane 8 dient. Die Zugorgane 8 umfassen einen oberen Fördertrum 10 und einen unteren Rücklauftrum 12 (vgl. Fig. 2). Die Fördereinrichtung 6 umfasst insgesamt 14 in die Förderrichtung FR versetzt angeordnete Förderelemente 14, 16. Die Förderelement 14, 16 erstrecken sich quer zur Förderrichtung FR länglich zwischen den Zugorganen 8 und sind daran befestigt. Jedes Förderelement 14, 16 weist einen mittig zwischen den Zugorganen 8 angeordneten Förderabschnitt 18 auf, dessen Breite geringer ist als der Abstand der Zugorgane 8 zueinander (vgl. Fig. 4).

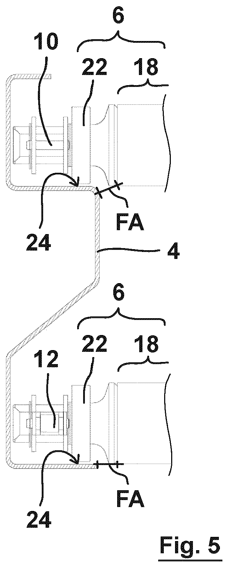

Jedes Förderelement 14, 16 weist zwei relativ zum Förderabschnitt 18 drehbar gelagerte Laufrollen 22 auf, die zumindest bei Anordnung des jeweiligen Förderelementes 14, 16 zwischen den Fördertrumen 10 zum Abrollen auf einer Abrollfläche 24 der Rahmeneinrichtung 4 aufliegt (vgl. Fig. 1 und 5, wobei in Fig. 5 ein im Betrieb nicht vorhandener Abstand zwischen den Laufrollen 22 und der Abrollfläche 24 gezeigt ist). Die Laufrollen 22 sind dabei zwischen dem Förderabschnitt 18 und einem der Zugorgane 8 angeordnet.

Die Förderelemente 14, 16 bilden paarweise sieben Fördereinheiten 26, 28, 29. Jede Fördereinheit 26, 28, 29 weist ein erstes Förderelement 14 und ein zweites Förderelement 16 auf, die in die Förderrichtung FR benachbart zueinander an den Zugorganen 8 befestigt sind. Die Fördereinheiten 26, 28, 29 sind unterschiedlich groß. Die Fördereinrichtung 6 umfasst drei Fördereinheiten einer ersten Größe, zu denen eine erste Fördereinheit 26 und eine zweite Fördereinheit 28 gehören, und vier Fördereinheiten einer zweiten Größe, zu denen eine dritte Fördereinheit 29 gehört. Ein Abstand A1 zwischen dem ersten Förderelement 14 und dem zweiten Förderelement 16 der ersten Fördereinheit 26 gleicht einem Abstand A2 zwischen dem ersten Förderelement 14 und dem zweiten Förderelement 16 der zweiten Fördereinheit 28. Der Abstand A1 ist außerdem größer als ein Abstand A3 zwischen dem zweiten Förderelement 16 der ersten Fördereinheit 26 und dem ersten Förderelement 14 der zweiten Fördereinheit 28. Außerdem ist der Abstand A1 größer als ein Abstand A4 zwischen dem ersten Förderelement 14 und dem zweiten Förderelement 16 der dritten Fördereinheit 29 (vgl. Fig. 2).

Jede Fördereinheit 26, 28, 29 weist zwei Aufnahmeelemente 30 auf, die an den Förderabschnitten 18 des ersten Förderelementes 14 und des zweiten Förderelementes 16 der jeweilige Fördereinheit 26, 28, 29 befestigt sind. Die Aufnahmeelemente 30 sind quer zur Förderrichtung FR voneinander beabstandet. Eine Länge L1 eines zwischen dem ersten Förderelement 14 und dem zweiten Förderelement 16 angeordneten Mittelabschnittes 32 des Aufnahmeelementes 30 ist derart größer als der Abstand A1, dass der Mittelabschnitt 32 durchhängt. Die Förderelemente 14, 16 weisen durchgängige Ausnehmungen 34 auf, durch die sich die Aufnahmeelemente 30 zu ihrer Befestigung hindurch erstrecken.

Die Förderabschnitte 18 der Förderelemente 14, 16 sind zur Ausbildung von sich zwischen ihnen hindurcherstreckenden Aufnahmeräumen 20 zur Aufnahme eines zu fördernden Rundballens um einen Förderabstand FA von der Rahmeneinrichtung 4 beabstandet. Fig. 5 verdeutlicht den Förderabstand FA, sodass die Förderabschnitte 18 in radialer Richtung die Rahmeneinrichtung 4 nicht berühren. Die Förderabschnitte 18 sind in eine zur Förderrichtung FR rechtwinklige, vertikale Richtung zumindest soweit von der Rahmeneinrichtung 4 beabstandet, wie die Förderabschnitte 18 von einer Umlenkachsenebene UE beabstandet sind, in der die vordere Umlenkachse U1 und die hintere Umlenkachse U2 liegen (vgl. Fig. 2).

## Patentansprüche

1. Sammelvorrichtung (2) für Rundballen, aufweisend eine Rahmeneinrichtung (4) und eine Fördereinrichtung (6), die zur Förderung mehrerer Rundballen relativ zu der Rahmeneinrichtung (4) in eine Förderrichtung (FR) ausgebildet ist und zumindest zwei Zugorgane (8), die quer zur Förderrichtung (FR) voneinander beabstandet sind, um eine vordere Umlenkachse (U1) und eine hintere Umlenkachse (U2) umlaufend ausgebildet sind sowie einen Fördertrum (10) und einen Rücklauftrum (12) aufweisen, und zumindest zwei in die Förderrichtung (FR) zueinander versetzt angeordnete Förderelemente (14,16) aufweist, die sich zumindest in einer Förderkonfiguration der Fördereinrichtung (6) zwischen den Fördertrumen (10) der Zugorgane (8) quer zur Förderrichtung (FR) länglich erstrecken, an den Zugorganen (8) befestigt sind und jeweils einen mittig zwischen den Zugorganen (8) angeordneten Förderabschnitt (18) aufweisen, wobei die Förderabschnitte (18) in der Förderkonfiguration zur Ausbildung eines sich zwischen ihnen hindurcherstreckenden Aufnahmeraumes (20) zur Aufnahme eines zu fördernden Rundballens um einen Förderabstand (FA) von der Rahmeneinrichtung (4) beabstandet sind, wobei die Fördereinrichtung (6) zumindest eine erste Fördereinheit (26) und eine zweite Fördereinheit (28) umfasst, die jeweils ein erstes Förderelement (14) und ein zweites Förderelement (16) umfassen, die in die Förderrichtung (FR) benachbart zueinander an den Zugorganen (8) befestigt sind, wobei der Abstand (A1) zwischen dem ersten Förderelement (14) und dem zweiten Förderelement (16) der ersten Fördereinheit (26) dem Abstand (A2) zwischen dem ersten Förderelement (14) und dem zweiten Förderelement (16) der zweiten Fördereinheit (28) gleicht, **dadurch gekennzeichnet, dass** das zweite Förderelement (16) der ersten Fördereinheit (26) in die Förderrichtung (FR) benachbart zum ersten Förderelement (14) der zweiten Fördereinheit (28) befestigt ist, wobei der Abstand (A1) zwischen dem ersten Förderelement (14) und dem zweiten Förderelement (16) der ersten Fördereinheit (26) abweicht von einem Abstand (A3) zwischen dem zweiten Förderelement (16) der ersten Fördereinheit (26) und dem ersten Förderelement (14) der zweiten Fördereinheit (28).

2. Sammelvorrichtung nach Anspruch 1, **dadurch gekennzeichnet, dass** die Rahmeneinrichtung (4) derart ausgebildet ist, dass die Förderabschnitte (18) im Betrieb während der Bewegung der sie aufweisenden Förderelemente (14,16) in die Förderrichtung (FR) durchgängig um den Förderabstand (FA) von der Rahmeneinrichtung (4) beabstandet bleiben.

3. Sammelvorrichtung nach einem der vorhergehenden Ansprüche, **dadurch gekennzeichnet, dass** die Förderabschnitte (18) in einem Längsschnitt zumindest so weit von der Rahmeneinrichtung (4) beabstandet sind, wie die Förderabschnitte (18) von einer Umlenkachsenebene (UE) beabstandet sind, in der die vordere Umlenkachse (U1) und die hintere Umlenkachse (U2) liegen.

4. Sammelvorrichtung nach einem der vorhergehenden Ansprüche, **dadurch gekennzeichnet, dass** zumindest eines der Förderelemente (14,16) zumindest eine relativ zum Förderabschnitt (18) des Förderelementes (14,16) drehbar gelagerte Laufrolle (22) aufweist, die zumindest bei Anordnung des Förderelementes (14,16) zwischen den Fördertrumen (10) zum Abrollen auf einer Abrolloberfläche (24) der Rahmeneinrichtung (4) aufliegt.

5. Sammelvorrichtung nach Anspruch 4, **dadurch gekennzeichnet, dass** die Laufrolle (22) zwischen dem Förderabschnitt (18) des Förderelementes (14,16) und zumindest einem der Zugorgane (8) angeordnet ist.

6. Sammelvorrichtung nach einem der vorhergehenden Ansprüche, **dadurch gekennzeichnet, dass** der Abstand (A1) zwischen dem ersten Förderelement (14) und dem zweiten Förderelement (16) der ersten Fördereinheit (26) größer ist als der Abstand (A3) zwischen dem zweiten Förderelement (16) der ersten Fördereinheit (26) und dem ersten Förderelement (14) der zweiten Fördereinheit (28).

7. Sammelvorrichtung nach einem der vorhergehenden Ansprüche, **dadurch gekennzeichnet, dass** die Fördereinrichtung (6) zumindest eine dritte Fördereinheit (29) umfasst, die ein erstes Förderelement (14) und ein zweites Förderelement (16) umfasst, die in die Förderrichtung (FR) benachbart zueinander an den Zugorganen (8) befestigt sind, wobei der Abstand (A1) zwischen dem ersten Förderelement (14) und dem zweiten Förderelement (16) der ersten Fördereinheit (26) größer ist als der Abstand (A4) zwischen dem ersten Förderelement (14) und dem zweiten Förderelement (16) der dritten Fördereinheit (29).

8. Sammelvorrichtung nach einem der vorhergehenden Ansprüche, **dadurch gekennzeichnet, dass** jede Fördereinheit (26,28) zumindest ein biegeschlaffes Aufnahmeelement (30) aufweist, das am Förderabschnitt (18) des ersten Förderelementes (14) und am Förderabschnitt (18) des zweiten Förderelementes (16) der jeweiligen Fördereinheit (26,28) befestigt ist.

9. Sammelvorrichtung nach Anspruch 8, **dadurch gekennzeichnet, dass** eine Länge (L1) eines zwischen dem ersten Förderelement (14) und dem zweiten Förderelement (16) angeordneten Mittelabschnittes (32) des Aufnahmeelementes (30) derart größer als der Abstand (A1) zwischen dem ersten Förderelement (14) und dem zweiten Förderelement (16) ist, dass der Mittelabschnitt (32) in der Förderkonfiguration durchhängt.

10. Sammelvorrichtung nach einem der Ansprüche 8 oder 9, **dadurch gekennzeichnet, dass** das erste Förderelement (14) und/oder das zweite Förderelement (16) eine durchgängige Ausnehmung (34) aufweisen/t, durch die sich das Aufnahmeelement (30) zu seiner Befestigung hindurcherstreckt.

11. Sammelvorrichtung nach einem der Ansprüche 8 bis 10, **dadurch gekennzeichnet, dass** das Aufnahmeelement (30) zumindest einen sich an den Mittelabschnitt (32) anschließenden Endabschnitt aufweist, der um das erste Förderelement (14) oder das zweite Förderelement (16) umgelegt ist und am Mittelabschnitt (32) befestigt ist.

12. Sammelvorrichtung nach einem der Ansprüche 8 bis 11, **dadurch gekennzeichnet, dass** die Fördereinheiten (26,28) jeweils zwei quer zur Förderrichtung (FR) voneinander beabstandete Aufnahmeelemente (30) aufweisen.

13. Sammelvorrichtung nach einem der vorhergehenden Ansprüche, **gekennzeichnet durch** eine Sensoreinrichtung, die zumindest einen Sensor aufweist und zur Feststellung zumindest einer Aufnahmekonfiguration der Fördereinrichtung (6) ausgebildet ist, in der das erste Förderelement (14) einer der Fördereinheiten (26,28,29) relativ zur Rahmeneinrichtung (4) in einer Förderelementaufnahmeposition angeordnet ist.

14. Sammelvorrichtung nach Anspruch 13, **dadurch gekennzeichnet, dass** die Sensoreinrichtung zur Feststellung zumindest einer ersten Aufnahmekonfiguration, in der das erste Förderelement (14) der ersten Fördereinheit (26) in der Förderelementaufnahmeposition angeordnet ist, und zumindest einer zweiten Aufnahmekonfiguration ausgebildet ist, in der das erste Förderelement (14) der dritten Fördereinheit (29) in der Förderelementaufnahmeposition angeordnet ist.

15. Sammelvorrichtung nach einem der Ansprüche 13 oder 14, **dadurch gekennzeichnet, dass** das in der Förderelementaufnahmeposition angeordnete erste Förderelement (14) von der Umlenkachsenebene (UE) geschnitten wird oder der Umlenkachsenebene (UE) näher ist als das zweite Förderelement (16) derselben Fördereinheit (26,28,29).

## Claims

1. Collecting apparatus (2) for round bales, comprising a frame device (4) and a conveying device (6) designed to convey a plurality of round bales relative to the frame device (4) in a conveying direction (FR), and comprising at least two traction members (8) spaced apart from each other transversely to the conveying direction (FR), designed to rotate about a front deflection axis (U1) and a rear deflection axis (U2), and comprising a conveying run (10) and a return run (12), and comprising at least two conveying elements (14,16) arranged offset from each other in the conveying direction (FR), which elements extend longitudinally transversely to the conveying direction (FR) between the conveying runs (10) of the traction members (8) in at least one conveying configuration of the conveying device (6), are attached to the traction members (8), and each have a conveying portion (18) arranged centrally between the traction members (8), wherein, in the conveying configuration, the conveying portions (18) are spaced apart from the frame device (4) by a conveying distance (FA) so as to form a receiving space extending between them (20) for receiving a round bale to be conveyed, wherein the conveying device (6) comprises at least a first conveying unit (26) and a second conveying unit (28), each comprising a first conveying element (14) and a second conveying element (16) which are attached to the traction members (8) adjacent to each other in the conveying direction (FR), wherein the distance (A1) between the first conveying element (14) and the second conveying element (16) of the first conveying unit (26) is equal to the distance (A2) between the first conveying element (14) and the second conveying element (16) of the second conveying unit (28), **characterized in that** the second conveying element (16) of the first conveying unit (26) is attached in the conveying direction (FR) adjacent to the first conveying element (14) of the second conveying unit (28), wherein the distance (A1) between the first conveying element (14) and the second conveying element (16) of the first conveying unit (26) differs from a distance (A3) between the second conveying element (16) of the first conveying unit (26) and the first conveying element (14) of the second conveying unit (28).

2. Collecting apparatus according to claim 1, **characterized in that** the frame device (4) is designed such that the conveying portions (18) remain continuously spaced apart from the frame device (4) by the conveying distance (FA) during operation while the conveying elements (14,16) having them move in the conveying direction (FR).

3. Collecting apparatus according to either of the preceding claims, **characterized in that** the conveying portions (18) are spaced at least as far apart from the frame assembly (4) in a longitudinal portion as the conveying portions (18) are spaced apart from a deflection axis plane (UE) in which the front deflection axis (U1) and the rear deflection axis (U2) are located.

4. Collecting apparatus according to any of the preceding claims, **characterized in that** at least one of the conveying elements (14,16) has at least one roller (22) rotatably mounted relative to the conveying portion (18) of the conveying element (14,16), which roller, at least when the conveying element (14,16) is arranged between the conveying portions (10), rests so as to roll on a rolling surface (24) of the frame device (4).

5. Collecting apparatus according to claim 4, **characterized in that** the roller (22) is arranged between the conveying portion (18) of the conveying element (14,16) and at least one of the traction members (8).

6. Collecting apparatus according to any of the preceding claims, **characterized in that** the distance (A1) between the first conveying element (14) and the second conveying element (16) of the first conveying unit (26) is greater than the distance (A3) between the second conveying element (16) of the first conveying unit (26) and the first conveying element (14) of the second conveying unit (28).

7. Collecting apparatus according to any of the preceding claims, **characterized in that** the conveying device (6) comprises at least a third conveying unit (29), which comprises a first conveying element (14) and a second conveying element (16) which are attached to the traction members (8) adjacent to each other in the conveying direction (FR), wherein the distance (A1) between the first conveying element (14) and the second conveying element (16) of the first conveying unit (26) is greater than the distance (A4) between the first conveying element (14) and the second conveying element (16) of the third conveying unit (29).

8. Collecting apparatus according to any of the preceding claims, **characterized in that** each conveying unit (26,28) has at least one flexible receiving element (30) which is attached to the conveying portion (18) of the first conveying element (14) and to the conveying portion (18) of the second conveying element (16) of the relative conveying unit (26,28).

9. Collecting apparatus according to claim 8, **characterized in that** a length (L1) of a central portion (32) of the receiving element (30) arranged between the first conveying element (14) and the second conveying element (16) is greater than the distance (A1) between the first conveying element (14) and the second conveying element (16) such that the central portion (32) sags in the conveying configuration.

10. Collecting apparatus according to either of claims 8 or 9,
**characterized in that** the first conveying element (14) and/or the second conveying element (16) have a continuous recess (34) through which the receiving element (30) extends for the attachment thereof.

11. Collecting apparatus according to any of claims 8 to 10,
**characterized in that** the receiving element (30) has at least one end portion adjoining the central portion (32), which end portion is folded around the first conveying element (14) or the second conveying element (16) and is attached to the central portion (32).

12. Collecting apparatus according to any of claims 8 to 11,
**characterized in that** the conveying units (26,28) each have two receiving elements (30) spaced apart from each other transversely to the conveying direction (FR).

13. Collecting apparatus according to any of the preceding claims,
**characterized by** a sensor device which has at least one sensor and is designed to detect at least one receiving configuration of the conveying device (6) in which the first conveying element (14) of one of the conveying units (26,28,29) is arranged relative to the frame device (4) in a conveying element receiving position.

14. Collecting apparatus according to claim 13, **characterized in that** the sensor device is designed to detect at least one first receiving configuration in which the first conveying element (14) of the first conveying unit (26) is arranged in the conveying element receiving position, and at least one second receiving configuration in which the first conveying element (14) of the third conveying unit (29) is arranged in the conveying element receiving position.

15. Collecting apparatus according to either of claims 13 or 14,
**characterized in that** the first conveying element (14) arranged in the conveying element receiving position is intersected by the deflection axis plane (UE) or is closer to the deflection axis plane (UE) than the second conveying element (16) of the same conveying unit (26,28,29).

## Revendications

1. Dispositif de collecte (2) pour balles rondes, présentant un appareil formant châssis (4) et un appareil de transport (6) conçu pour transporter plusieurs balles rondes par rapport à l'appareil formant châssis (4) dans une direction de transport (FR), et au moins deux organes de traction (8) qui sont espacés l'un de l'autre transversalement à la direction de transport (FR), sont conçus de manière à tourner autour d'un axe de déviation avant (U1) et d'un axe de déviation arrière (U2) et présentent un compartiment de transport (10) et un compartiment de retour (12), et au moins deux éléments de transport (14, 16) disposés de manière à être décalés l'un par rapport à l'autre dans la direction de transport (FR) qui, au moins dans une configuration de transport de l'appareil de transport (6), s'étendent longitudinalement entre les compartiments de transport (10) des organes de traction (8) transversalement à la direction de transport (FR), sont fixés aux organes de traction (8) et présentent respectivement une section de transport (18) disposée au centre entre les organes de traction (8), dans lequel les sections de transport (18) sont espacées, dans la configuration de transport, d'une distance de transport (FA) de l'appareil formant châssis (4) pour la formation d'un espace de réception (20) s'étendant entre elles et permettant la réception d'une balle ronde à transporter, dans lequel l'appareil de transport (6) comprend au moins une première unité de transport (26) et une deuxième unité de transport (28) qui comprennent respectivement un premier élément de transport (14) et un second élément de transport (16) qui sont fixés aux organes de traction (8) à proximité l'un à l'autre dans la direction de transport (FR), dans lequel la distance (A1) entre le premier élément de transport (14) et le second élément de transport (16) de la première unité de transport (26) est égale à la distance (A2) entre le premier élément de transport (14) et le second élément de transport (16) de la deuxième unité de transport (28), **caractérisé en ce que** le second élément de transport (16) de la première unité de transport (26) est fixé à proximité du premier élément de transport (14) de la deuxième unité de transport (28) dans la direction de transport (FR), dans lequel la distance (A1) entre le premier élément de transport (14) et le second élément de transport (16) de la première unité de transport (26) diffère d'une distance (A3) entre le second élément de transport (16) de la première unité de transport (26) et le premier élément de transport (14) de la deuxième unité de transport (28).

2. Dispositif de collecte selon la revendication 1, **caractérisé en ce que** l'appareil formant châssis (4) est conçu de telle sorte que les sections de transport (18), en fonctionnement pendant le déplacement des éléments de transport (14, 16) qui les présentent dans la direction de transport (FR), restent espacés en continu d'une distance de transport (FA) de l'appareil formant châssis (4).

3. Dispositif de collecte selon l'une des revendications précédentes,
**caractérisé en ce que** les sections de transport (18) sont espacées, en coupe longitudinale, de l'appareil formant châssis (4) d'au moins autant que les sections de transport (18) sont espacées d'un plan d'axes de déviation (UE) dans lequel se trouvent l'axe de déviation avant (U1) et l'axe de déviation arrière (U2).

4. Dispositif de collecte selon l'une des revendications précédentes,
**caractérisé en ce qu'**au moins l'un des éléments de transport (14, 16) présente au moins un galet de roulement (22) monté rotatif par rapport à la section de transport (18) de l'élément de transport (14, 16), lequel galet de roulement repose, au moins lors de la disposition de l'élément de transport (14, 16) entre les compartiments de transport (10), pour le roulement sur une surface de roulement (24) de l'appareil formant châssis (4).

5. Dispositif de collecte selon la revendication 4, **caractérisé en ce que** le galet de roulement (22) est disposé entre la section de transport (18) de l'élément de transport (14, 16) et au moins l'un des organes de traction (8).

6. Dispositif de collecte selon l'une des revendications précédentes,
**caractérisé en ce que** la distance (A1) entre le premier élément de transport (14) et le second élément de transport (16) de la première unité de transport (26) est supérieure à la distance (A3) entre le second élément de transport (16) de la première unité de transport (26) et le premier élément de transport (14) de la deuxième unité de transport (28).

7. Dispositif de collecte selon l'une des revendications précédentes,
**caractérisé en ce que** l'appareil de transport (6) comprend au moins une troisième unité de transport (29) qui comprend un premier élément de transport (14) et un second élément de transport (16) qui sont fixés aux organes de traction (8) à proximité l'un de l'autre dans la direction de transport (FR), dans lequel la distance (A1) entre le premier élément de transport (14) et le second élément de transport (16) de la première unité de transport (26) est supérieure à la distance (A4) entre le premier élément de transport (14) et le second élément de transport (16) de la troisième unité de transport (29).

8. Dispositif de collecte selon l'une des revendications précédentes,
**caractérisé en ce que** chaque unité de transport (26, 28) présente au moins un élément de réception (30) souple en flexion qui est fixé à la section de transport (18) du premier élément de transport (14) et à la section de transport (18) du second élément de transport (16) de l'unité de transport (26, 28) respective.

9. Dispositif de collecte selon la revendication 8, **caractérisé en ce qu'**une longueur (L1) d'une section centrale (32) de l'élément de réception (30), disposée entre le premier élément de transport (14) et le second élément de transport (16), est supérieure à la distance (A1) entre le premier élément de transport (14) et le second élément de transport (16) de telle que la section centrale (32) s'affaisse dans la configuration de transport.

10. Dispositif de collecte selon l'une des revendications 8 ou 9,
**caractérisé en ce que** le premier élément de transport (14) et/ou le second élément de transport (16) présentent un évidement continu (34) à travers lequel s'étend l'élément de réception (30) en vue de sa fixation.

11. Dispositif de collecte selon l'une des revendications 8 à 10,
**caractérisé en ce que** l'élément de réception (30) présente au moins une section d'extrémité se raccordant à la section centrale (32) qui est repliée autour du premier élément de transport (14) ou du second élément de transport (16) et est fixée à la section centrale (32).

12. Dispositif de collecte selon l'une des revendications 8 à 11,
**caractérisé en ce que** les unités de transport (26, 28) présentent respectivement deux éléments de réception (30) espacés l'un de l'autre transversalement à la direction de transport (FR).

13. Dispositif de collecte selon l'une des revendications précédentes,
**caractérisé par** un appareil à capteur qui présente au moins un capteur et qui est conçu pour constater au moins une configuration de réception de l'appareil de transport (6) dans laquelle le premier élément de transport (14) de l'une des unités de transport (26, 28, 29) est disposé dans une position de réception d'élément de transport par rapport à l'appareil formant châssis (4).

14. Dispositif de collecte selon la revendication 13, **caractérisé en ce que** l'appareil à capteur est conçu pour détecter au moins une première configuration de réception dans laquelle le premier élément de transport (14) de la première unité de transport (26) est disposé dans la position de réception d'élément de transport, et au moins une seconde configuration de réception dans laquelle le premier élément de transport (14) de la troisième unité de transport (29) est disposé dans la position de réception d'élément de transport.

15. Dispositif de collecte selon l'une des revendications 13 ou 14,
**caractérisé en ce que** le premier élément de transport (14), disposé dans la position de réception d'élément de transport, est coupé par le plan d'axes de déviation (UE) ou est plus proche du plan d'axes de déviation (UE) que le second élément de transport (16) de la même unité de transport (26, 28, 29).
